Europäisches Patentamt

European Patent Office

Office européen des brevets

(11) Veröffentlichungsnummer : **0 074 025**
**B1**

(12) **EUROPÄISCHE PATENTSCHRIFT**

(45) Veröffentlichungstag der Patentschrift :
30.01.85

(21) Anmeldenummer : **82107833.4**

(22) Anmeldetag : **26.08.82**

(51) Int. Cl.⁴ : **C 08 G 69/46, C 08 G 69/16**

(54) Verfahren zur kontinuierlichen Herstellung von Polycaprolactam.

(30) Priorität : **02.09.81 DE 3134716**

(43) Veröffentlichungstag der Anmeldung :
**16.03.83 Patentblatt 83/11**

(45) Bekanntmachung des Hinweises auf die Patenterteilung : **30.01.85 Patentblatt 85/05**

(84) Benannte Vertragsstaaten :
**BE CH DE GB IT LI NL**

(56) Entgegenhaltungen :
**EP-A- 0 000 397**
**DE-A- 1 495 198**

(73) Patentinhaber : **BASF Aktiengesellschaft**
**Carl-Bosch-Strasse 38**
**D-6700 Ludwigshafen (DE)**

(72) Erfinder : **Strehler, Hugo, Dr.**
**Carostrasse 12**
**D-6710 Frankenthal (DE)**
Erfinder : **Hoerauf, Werner, Dr.**
**Homburger Strasse 10**
**D-6700 Ludwigshafen (DE)**
Erfinder : **Valentin, Guenter**
**Pfarrer-Friedrich-Strasse 43**
**D-6700 Ludwigshafen (DE)**
Erfinder : **Urbanek, Friedrich, Dr.**
**Edith-Stein-Strasse 1**
**D-6707 Schifferstadt (DE)**

**Beschreibung**

In der Technik wird Polycaprolactam durch Polymerisation von Caprolactam bei Temperaturen von 240 bis 300 °C in Polymerisationsrohren, sogenannten VK-Rohren, die auch in Zonen unterteilt sein können, hergestellt. Es wurden schon erhebliche Anstrengungen unternommen, das Polymerisationsverfahren zu verbessern und zu beeinflussen.

Aus der DE-AS 14 95 198 ist ein Verfahren bekannt, bei dem man die Lactamschmelze in ein Polymerisationsrohr leitet, dessen oberstes Viertel einen größeren Durchmesser als die übrigen Teile des Polymerisationsrohres hat, die Lactamschmelze unter Rühren überwiegend in dem obersten Viertel polymerisiert und die Polylactamschmelze dann durch die im übrigen Teil des Rohres angeordneten reversiblen Wärmeaustauscher so abkühlt, daß die Temperatur im letzten Viertel des zylindrischen Rohres nur geringfügig über dem Erstarrungspunkt des Polycaprolactams liegt. Durch dieses Verfahren werden zwar die Schwierigkeiten beim Zumischen von Wasser enthaltenden Zuschlägen am Kopf des VK-Rohres behoben, es ist jedoch erforderlich, das zugeführte Wasser wieder aus der Polymerisationszone auszuschleusen, ohne daß Verluste an Caprolactam und Kettenreglern, wie Essigsäure, eintreten. Entsprechend Klare, Synthetische Fasern aus Polyamiden (Akademie-Verlag Berlin 1963, S. 82) läßt man den überschüssigen Dampf durch eine Dampfablassleitung in ein Kondensationsgefäß entweichen und gewinnt die mitentweichenden Caprolactamdämpfe durch Eindampfen des Kondensates. Eine solche Arbeitsweise ist technisch aufwendig und gewährleistet bei einer kontinuierlichen Polymerisation nicht eine gleichbleibende Zusammensetzung der polymerisierenden Schmelze.

Aus der DE-OS 27 32 328 ist auch schon bekannt, das aus dem Kopf des VK-Rohres entnommene Dampfgemisch zu fraktionieren. Dieses Verfahren ist jedoch verbesserungsbedürftig, um eine gleichbleibende Zusammensetzung der zurückgeführten Menge und somit der polymerisierenden Schmelze zu gewährleisten. Abweichungen führen insbesondere zu Polymerisaten, die in ihrer Anfärbbarkeit schwanken.

Es war deshalb die technische Aufgabe gestellt, bei der Polymerisation von Caprolactam in einem senkrecht stehenden Reaktionsrohr die Ausschleusung des miteingebrachten Wassers so zu gestalten, daß keine Verluste an Caprolactam und Kettenreglern auftreten, die polymerisierende Schmelze eine gleichbleibende Zusammensetzung aufweist und Schwankungen in der Anfärbbarkeit des Polymerisats vermieden werden.

Diese technische Aufgabe wird gelöst in einem Verfahren zur kontinuierlichen Herstellung von Polycaprolactam, bei dem ε-Caprolactam in einem senkrechtstehenden, von oben nach unten durchströmten Rohrreaktor bei polyamidbildenden Temperaturen in einer mechanisch durchmischten Zone unter Zusatz von 5-95 Gew.-% Wasser enthaltenden Mitteln, in einer Menge von bis zu 200 Gew.-%, bezogen auf frisch zugeführtes ε-Caprolactam, sowie Essigsäure oder Propionsäure als Kettenregler in einer Menge von 0,05-0,5 Gew.-% bezogen auf das eingesetzte ε-Caprolactam, teilweise polymerisiert, in einer oder mehreren anschließenden Wärmeaustauschzonen bis zum gewünschten Polymerisationsgrad weiterpolymerisiert, und dann Polycaprolactam schmelzflüssig ausgetragen wird, wobei Wasserdampf und tensionsmäßig enthaltenes ε-Caprolactam am Kopf des Rohrreaktors abgetrennt und fraktioniert werden, das dadurch gekennzeichnet ist, daß man am Kopf des Rohrreaktors ein dampfförmiges Gemisch aus ε-Caprolactam, Wasser sowie Essigsäure oder Propionsäure entnimmt, dieses dem mittleren Teil einer Kolonne zuführt, am Kopf der Kolonne Wasser entnimmt, im Kolonnensumpf eine Temperatur von 125 bis 145 °C einhält und das als Kolonnensumpf anfallende Gemisch aus ε-Caprolactam und Essigsäure oder Propionsäure sowie wenig Wasser in den Kopf des Rohrreaktors zurückführt.

Das neue Verfahren hat den Vorteil, daß das in das VK-Rohr miteingebrachte Wasser problemlos ausgeschleust wird und zugleich keine Verluste an Caprolactam und Kettenreglern eintreten.

Ferner hat das neue Verfahren den Vorteil, daß die polymerisierende Caprolactamschmelze eine gleichbleibende Zusammensetzung aufweist. Das neue Verfahren hat vor allem den Vorteil, daß Caprolactam und Oligomerenhaltige wäßrige Lösungen, die beim Extrahieren von Polycaprolactam anfallen, ohne oder nur teilweise vorherige Aufkonzentrierung mitverwendet werden können. Hierdurch werden Schwierigkeiten, die durch Ausfallen von Oligomeren auftreten, vermieden.

Die Polymerisation erfolgt in einem senkrechtstehenden, von oben nach unten durchströmten Rohrreaktor, wie er unter der Bezeichnung VK-Rohr in der Literatur vielfach beschrieben ist. In der ersten mechanisch durchmischten Reaktionszone, die etwa 25 bis 40 % des Volumens des Rohrreaktors umfaßt, erfolgt eine teilweise Polymerisation, bei der die Caprolactamschmelze zu etwa 20 bis 70 % in Polymerisat übergeht. Caprolactam wird zweckmäßig in schmelzflüssigem Zustand in diese erste Zone zugeführt und durch Wärmetauscher, z. B. Heizschlangen, auf polyamidbildende Temperaturen, vorzugsweise 240 bis 295 °C, erhitzt. Die Weiterpolymerisation bis zum gewünschten Polymerisationsgrad erfolgt in einer oder mehreren anschließenden Wärmeaustauschzonen im Verlauf des Rohrreaktors. Hierbei hält man vorteilhaft Temperaturen von 240 bis 300 °C ein. Der Austrag des schmelzflüssigen Polycaprolactams erfolgt beispielsweise über Austragsschnecken oder Zahnradpumpen. Das Polymerisat wird dann als Band oder Faden abgenommen und granuliert. Ein geeignetes Verfahren wird beispielsweise beschrieben in der DE-AS 14 95 198.

Die Polymerisation wird unter atmosphärischem Druck oder schwach erhöhtem Druck, z. B. von 1,02 bis 3 bar, durchgeführt. Die für den Überdruck angegebenen Zahlenwerte beziehen sich auf den Dampfraum über der ersten Reaktionszone. Der Druck in der Schmelze ist and jedem Punkt um den hydrostatischen Druck der darüber befindlichen Flüssigkeitssäule erhöht. Mit dem geschmolzenen Caprolactam werden Essigsäure oder Propionsäure als Regler in einer Menge von 0,05 bis 0,5 Gew.-%, bezogen auf das eingesetzte Caprolactam, zugeführt.

Darüber hinaus führt man mit dem frischen Caprolactam Wasser enthaltende Mittel zu. Erfindungsgemäß seien darunter Zusätze verstanden, die 5 bis 95 Gew.-% an Wasser enthalten. Solche Zusätze sind beispielsweise wäßrige Suspensionen oder Lösungen, Pigmentfarbstoffe, Stabilisatoren oder Antistatika, die in der Regel 5 bis 15 Gew.-% der genannten Stoffe enthalten.

Ferner sind als Wasser enthaltende Mittel wäßrige Lösungen von Caprolactam und dessen Oligomeren, die bei der Extraktion von Polycaprolactam anfallen, zu verstehen. Solche Extraktionswässer enthalten z. B. 5 bis 20 Gew.-% Caprolactam und dessen Oligomere. Die Extraktionswässer können vor ihrer Verwendung auch auf einen Gehalt von bis zu 70 Gew.-% konzentriert werden. Die Menge an zugeführtem Wasser kann erfindungsgemäß bis zu 200 Gew.-%, bezogen auf frisch zugeführtes Caprolactam, betragen.

Bei den angewandten Temperaturen verdampft das miteingebrachte Wasser sofort und es bildet sich im Gasraum über der ersten Reaktionszone ein dampfförmiges Gemisch aus Wasser, Caprolactam sowie Essigsäure oder Propionsäure. Erfindungsgemäß wird dieses dampfförmige Gemisch, das z. B. aus 70 bis 90 Gew.-% Caprolactam, 10 bis 30 Gew.-% Wasser und 0,1 bis 0,5 Gew.-% Essigsäure oder Propionsäure besteht, am Kopf des Rohrreaktors entnommen und dem mittleren Teil einer Kolonne zugeführt. Geeignete Kolonnen sind beispielsweise Füllkörperkolonnen, Siebbodenkolonnen oder Glockenbodenkolonnen. Geeignete Kolonnen haben vorteilhaft 3 bis 10 theoretische Böden. Am Kopf der Kolonne wird das gesamte Wasser entnommen und kondensiert. 5 bis 10 % des Kondensats werden als Rücklauf auf die Kolonne gegeben. Es ist ein wesentliches Merkmal der Erfindung, daß man im Kolonnensumpf eine Temperatur von 125 bis 145 °C, insbesondere 130 bis 140 °C einhält. Vorteilhaft ist die Kolonne deshalb mit einem Umlaufverdampfer ausgestattet. Im Sumpf erhält man somit ein Gemisch aus Caprolactam und Essigsäure oder Propionsäure sowie wenig Wasser. Ein typisches Gemisch enthält beispielsweise 92 bis 98 Gew.-% Caprolactam, 2 bis 8 Gew.-% Wasser sowie 0,1 bis 0,5 Gew.-% Essigsäure oder Propionsäure. Durch die Wahl einer einmal gewählten gleichbleibenden Temperatur im Sumpf der Kolonne gelingt es, die Zusammensetzung des Sumpfes konstant zu halten. Dies ist wichtig, da dieses Gemisch wieder in den Kopf des Rohrreaktors zurückgeführt wird und somit eine gleichbleibende Zusammensetzung der polymerisierenden Caprolactamschmelze gewährleistet wird. Es versteht sich, daß das im Sumpf der Kolonne anfallende Gemisch in dem Maße in den Kopf des Rohrreaktors zurückgeführt wird, wie es anfällt.

Das nach dem Verfahren der Erfindung erhaltene Polycaprolactam eignet sich zur Herstellung von Formteilen oder zur Herstellung von Fäden oder Fasern.

Das Verfahren nach der Erfindung sei an folgendem Beispiel veranschaulicht.

Beispiel

In ein VK-Rohr, das eine Länge von 18 m und einen Durchmesser von 1,6 m besitzt und das durch 3 Wärmetauscher in 4 Zonen unterteilt ist, werden pro Stunde eine Lösung, bestehend aus 756,5 kg Frischlactam, 136 kg auf 68,7 Gew.-% vorkonzentriertes Extraktwasser, das ca. 75 Gew.-% monomeres und ca. 25 Gew.-% oligomeres Caprolactam (bezogen auf den Gehalt an Caprolactam mit Oligomeren) enthält, sowie 1,275 kg Essigsäure zugeführt.

Die Wärmezufuhr wird so geregelt, daß in der obersten mechanisch durchmischten Zone eine Temperatur von 257 °C eingehalten wird.

Hierbei entsteht im Dom des VK-Rohres ein Dampfgemisch, das zu 82,8 % aus Caprolactam, zu 16,9 % aus Wasser und zu 0,28 % aus Essigsäure besteht.

Dieses wird in die Mitte einer Füllkörperkolonne von 4,5 m Länge und 1 m Durchmesser geleitet und der Kolonnensumpf mit einem Umlauferhitzer auf 133 °C gehalten. Der Dampf, der den Kolonnenkopf verläßt, wird kondensiert. Die Kondensatmenge beträgt 28 kg/h. Sie enthält 0,08 kg/h Caprolactam, ist frei von Essigsäure und besteht somit aus ca. 99,7 % Wasser. Über einen Flow-Splitter wird der Kondensatstrom so geteilt, daß 1,4 kg/h in die Kolonne zurückfließen. Im Kolonnensumpf bildet sich eine Schmelze, die zu 95 Gew.-% aus Caprolactam, 4 Gew.-% Wasser und Essigsäure besteht. 189 kg/h dieser Schmelze fließen pro Stunde über einen Siphon in den VK-Rohrkopf zurück.

In den nachfolgenden Zonen wird bei Temperaturen von 265° und 250° auspolymerisiert.

Nach 18,6 Stunden Verweilzeit wird aus dem VK-Rohr unten mit Spinnpumpen eine Polymerschmelze abgezogen, die einen Gehalt an extrahierbaren Anteilen von 11 % besitzt und deren extrahierte Schmelze eine Lösungsviskosität von 2,51 η rel. aufweist.

Aus dem so erhaltenen Polymeren ersponnene Fäden und Fasern haben eine gleichmäßigere Anfärbbarkeit.

**Ansprüche**

1. Verfahren zur kontinuierlichen Herstellung von Polycaprolactam, bei dem ε-Caprolactam in einem senkrechtstehenden, von oben nach unten durchströmten Rohrreaktor bei polyamidbildenden Temperaturen in einer mechanisch durchmischten Zone unter Zusatz von Mitteln, die 5-95 Gew.-% Wasser enthalten, wobei die Menge an zugeführtem Wasser bis zu 200 Gew.-%, bezogen auf frisch zugeführtes ε-Caprolactam beträgt, sowie von Essigsäure oder Propionsäure als Kettenregler in einer Menge von 0,05-0,5 Gew.-%, bezogen auf das eingesetzte ε-Caprolactam, teilweise polymerisiert, in einer oder mehreren anschließenden Wärmeaustauschzonen bis zum gewünschten Polymerisationsgrad weiterpolymerisiert und dann Polycaprolactam schmelzflüssig ausgetragen wird, wobei Wasserdampf und tensionsmäßig enthaltenes ε-Caprolactam am Kopf des Rohrreaktors abgetrennt und fraktioniert werden, dadurch gekennzeichnet, daß man am Kopf des Rohrreaktors ein dampfförmiges Gemisch aus ε-Caprolactam, Wasser und Essigsäure oder Propionsäure entnimmt, dem mittleren Teil einer Kolonne zuführt, am Kopf der Kolonne Wasser entnimmt, im Kolonnensumpf eine Temperatur von 125 bis 145 °C einhält und das als Kolonnensumpf anfallende Gemisch aus ε-Caprolactam, Essigsäure oder Propionsäure sowie wenig Wasser in den Kopf des Rohrreaktors zurückführt.

2. Verfahren nach Anspruch 1, dadurch gekennzeichnet, daß man im Sumpf der Kolonne eine einmal gewählte Temperatur einhält.

**Claims**

1. A process for the continuous preparation of polycaprolactam, in which ε-caprolactam is partially polymerized, with the addition of an agent containing from 5 to 95 % by weight of water, the amount of water added being up to 200 % by weight, based on freshly introduced ε-caprolactam, and of acetic acid or propionic acid as chain regulator in an amount of from 0.05 to 0.5 % by weight, based on the ε-caprolactam used, at a nylon-forming temperature, in a mechanically agitated zone in a vertical tubular reactor through which the ε-caprolactam flows downwards, and is polymerized further, in one or more downstream heat exchange zones, until the desired degree of polymerization is reached, polycaprolactam is then discharged as a melt, and water vapor, and ε-caprolactam present therein proportionately to its partial vapor pressure are removed and fractionated, wherein a gaseous mixture of ε-caprolactam, water and acetic acid or propionic acid is removed at the top of the tubular reactor and fed to the middle section of a column, water is removed at the top of the column, the bottom of the column is maintained at from 125 to 145°C, and the mixture obtained at the bottom of the column and comprising caprolactam, acetic acid or propionic acid, and a small amount of water is recycled to the top of the tubular reactor.

2. A process as claimed in claim 1, wherein the bottom of the column is maintained at a selected temperature.

**Revendications**

1. Procédé de préparation en continu de polycaprolactame, dans lequel la ε-caprolactame est partiellement polymérisée dans un réacteur tubulaire vertical, traversé de haut en bas, à des températures auxquelles se forme du polyamide, dans une zone à agitation mécanique, sous addition de produits contenant entre 5 et 95 % en poids d'eau, la proportion d'eau ajoutée pouvant aller jusqu'à 200 % en poids par rapport à la ε-caprolactame fraîche introduite, ainsi que d'acide acétique ou d'acide propionique en tant que régulateur de la longueur des chaînes, raison de 0,05 à 0,5 % du poids de la ε-caprolactame mise en œuvre, puis la polymérisation est poursuivie dans une ou plusieurs zones d'échange de chaleur jusqu'au degré de polymérisation voulu, la polycaprolactame étant soutirée à l'état fondu et la vapeur d'eau et la ε-caprolactame y contenues séparées au sommet du réacteur tubulaire et fractionnées, caractérisé en ce que l'on soutire au sommet du réacteur tubulaire un mélange gazeux de ε-caprolactame d'eau et d'acide acétique ou d'acide propionique, que l'on introduit dans la partie médiane d'une colonne, au sommet de laquelle on sépare l'eau et à la base de laquelle, la température y étant maintenue entre 125 et 145 °C, on soutire un mélange résiduel de ε-caprolactame et d'acide acétique ou d'acide propionique avec une proportion mineure d'eau, qui est ramené au sommet du réacteur tubulaire.

2. Procédé suivant la revendication 1, caractérisé en ce que, dans la partie inférieure de la colonne, la température une fois choisie est maintenue constante.